# DEMANDE DE BREVET EUROPEEN

(11) **EP 0 917 244 A1**
(43) Date de publication de la demande: **19.05.1999**
(21) Numéro de dépôt: 98402742.5
(22) Date de dépôt: 04.11.1998
(51) Int. Cl.: H01R 4/06

(54) **Connexion électrique entre panneaux composités R.T.M.**

(30) Priorité: 12.11.1997 FR 9714141
(71) Demandeur: AUTOMOBILES PEUGEOT, 75116 Paris (FR); AUTOMOBILES CITROEN, 92200 Neuilly-sur-Seine (FR)
(72) Inventeur: Maret, Jean-Claude, 91380 Chilly Mazarin (FR); Chery, François, 92400 Courbevoie (FR)
(74) Mandataire: Gendraud, Pierre

(57) **Abrégé**

La présente invention est un dispositif de liaison simple et facile à mettre en oeuvre permettant de raccorder deux éléments de conduction dont au moins une partie d'un des éléments est intégré dans la mousse d'un panneau composite (1, 2) composé d'une mousse et d'une peau en résine, caractérisé en ce que l'élément intégré (4) est totalement noyé dans la mousse du panneau composite et que le dispositif de liaison est constitué d'au moins une pièce rapportée (9) qui est insérée dans le panneau composite, au droit de l'élément intégré.

## Description

La présente invention concerne le domaine des panneaux composites réalisés suivant le procédé RTM (en anglo-saxon Resine Transfert Molding). Elle a pour objet le raccordement d'au moins un élément de conduction intégré dans ces panneaux composites avec un deuxième élément de conduction.

On entend par élément de conduction tout élément capable de transmettre soit du courant comme un fil électrique, soit un fluide comme une canalisation, soit un mouvement comme un câble, soit des informations comme des câbles multiplexés.

Les pièces en composite réalisées suivant le procédé RTM sur noyau mousse, sont des éléments complexes qui permettent des intégrations de nombreux sous-ensembles, notamment des faisceaux de câbles, des conduites, des tuyaux et des gaines. Ces éléments sont d'abord positionnés et fixés dans le moule du noyau ; on doit s'assurer que les bouts de cet élément dépassent afin qu'ils restent utilisables. Après moussage, le noyau est ébavuré et décapé pour être ensuite placé entre deux tissus de fibres. Cet ensemble est positionné dans un second moule d'injection de résine en vérifiant, là encore, que les extrémités de l'élément sont bien protégées; la résine constitue la peau du panneau composite. La pièce est alors injectée, ébavurée et peinte.

Le moule doit donc comporter des évidements afin de placer les extrémités des éléments et d'éviter qu'elles ne soient prises dans la résine. La mise en place est donc laborieuse et le démoulage également.

L'élément composite ainsi réalisé comporte des bouts d'éléments qui dépassent, ce qui n'est pas très pratique ni esthétique, car il faut protéger ces bouts afin d'éviter qu'ils ne soient endommagés.

Lorsque l'on veut relier l'élément intégré, on doit le connecter par des moyens classiques qui sont alors visibles, peu esthétiques et encombrants. Ce problème est particulièrement accentué au droit des joints entre les deux panneaux composites, lorsque l'on souhaite relier deux éléments noyés chacun dans un panneau composite. En effet, lors de la pose du joint, il faut s'assurer du bon positionnement de chaque bout de l'élément par rapport au joint. Ces bouts peuvent également gêner le collage des panneaux. Une fois que les panneaux sont collés, il faut réaliser la connexion entre les éléments de chacun des panneaux, puis prévoir un cache pour dissimuler la connexion.

Le but de la présente invention est de proposer un moyen simple et facile à mettre en oeuvre permettant de raccorder les deux éléments de conduction dont au moins un est totalement intégré dans la mousse d'un panneau composite grâce à l'utilisation astucieuse et originale d'une pièce rapportée.

L'intégration totale de l'élément de conduction facilite la fabrication de la pièce. En effet, lors de la fabrication, on place ledit élément à intégrer dans le moule, puis on injecte la mousse. Comme l'élément est totalement intégré dans la mousse, la pièce en mousse ne présente aucune aspérité. La pièce en mousse est ensuite placée dans un deuxième moule un peu plus grand que le premier et qui ne présente aucune caractéristique particulière, puis on injecte la résine. Le panneau ainsi réalisé est donc facilement démoulable.

Selon la présente invention, le dispositif de liaison de deux éléments de conduction, dont au moins une partie d'un des éléments est intégré dans un panneau composite composé d'une mousse et d'une peau en résine, est caractérisé en ce que ledit élément intégré est totalement noyé dans la mousse du panneau composite et en ce que le dispositif de liaison est constitué d'au moins une pièce rapportée qui est insérée dans le panneau composite au droit de l'élément intégré. On a ainsi un panneau composite qui ne présente aucune aspérité et qui est donc facile à fabriquer et à manipuler. De plus la pièce rapportée ne dépasse pratiquement pas du panneau composite, la liaison est donc esthétique.

Selon une variante de l'invention, la liaison est réalisée dans un joint entre deux panneaux composites. La pièce rapportée traverse alors le joint.

Selon une variante de l'invention, la liaison est réalisée sur une des surfaces du corps du panneau composite.

Selon une variante de l'invention, le deuxième élément est branché sur la surface du panneau composite.

Selon une disposition particulière de l'invention, le point d'arrivée de l'élément intégré est identifié par un marquage réalisé sur la surface du panneau composite, ce qui permet d'identifier la position dudit élément dans le panneau composite.

Selon une variante de l'invention, l'élément de conduction est un fil électrique.

Selon une disposition particulière de l'invention, la pièce rapportée est constituée d'une matière conductrice.

Selon une autre disposition particulière de l'invention, l'élément de conduction est un fil mulitiplexé, constitué d'un fil conducteur et d'une gaine protectrice.

Selon une disposition particulière de l'invention, la pièce rapportée est constituée de deux parties conductrices séparées par une partie isolante. Dans ce cas, une des parties conductrice est reliée à l'intérieur du fil multiplexé et l'autre partie conductrice est reliée à la gaine protectrice du fil multiplexé.

Selon une variante de l'invention, l'élément de conduction est constitué d'un tube transportant un fluide.

Selon une disposition particulière de l'invention, la pièce rapportée est un tube occulté en au moins un de ses deux côtés et comporte au moins deux orifices afin de permettre l'écoulement du fluide. Dans ce cas la pièce rapportée traverse les deux tubes et les deux orifices débouchent chacun dans un des tubes.

Selon une variante de l'invention, l'élément de conduction est constitué d'un câble. Le câble peut être disposé dans une gaine protectrice, afin de permettre son mouvement dans la mousse.

Selon une disposition particulière de l'invention une des extrémités du câble est reliée à un bras de levier disposé dans un boîtier noyé dans la mousse du panneau composite. Ce bras de levier permet la transmission du mouvement du câble. Chaque câble est pourvu d'un boîtier similaire.

Selon une disposition particulière de l'invention, la pièce rapportée est une goupille cannelée qui vient traverser un bras de levier. Les cannelures de la goupille permettent la transmission du mouvement d'un câble à l'autre par l'intermédiaire du bras de levier.

D'autres caractéristiques et avantages de l'invention apparaîtront plus clairement de la description de plusieurs variantes qui va suivre, donnée uniquement à titre d'exemple et faite en se référant aux dessins annexés sur lesquels :
- la figure 1 est une vue en coupe de l'art antérieur ;
- la figure 2 est une vue en coupe de deux panneaux composites comprenant chacun un fil électrique et réalisés selon une première variante de l'invention, mais avant la pose de l'élément rapporté ;
- la figure 3 est une vue selon les trois côtés du bout du fil électrique qui peut être intégré dans le panneau composite selon l'invention ;
- la figure 4 est une vue en coupe de deux panneaux composites, selon la première variante de l'invention après perçage ;
- la figure 5 est une vue en coupe de deux panneaux composites après pause de la pièce rapportée selon une première variante de l'invention ;
- la figure 6 est une vue en coupe d'un panneau composite, selon une deuxième variante de l'invention ;
- la figure 7 est une vue en coupe de deux panneaux composites comprenant un tube intégré et la pièce rapporté correspondante, selon une troisième variante de l'invention ;
- la figure 8 est une vue en coupe du détail de deux panneaux composites, comprenant un fil multiplexé et la pièce rapportée correspondante, selon une quatrième variante de l'invention ;
- la figure 9 est une vue en coupe de deux panneaux composites comprenant des câbles de commande et la pièce rapportée correspondante, selon une cinquième variante de l'invention ;
- la figure 10 est une vue suivant XX de l'arrivée du câble dans la variante, selon la cinquième variante de l'invention.

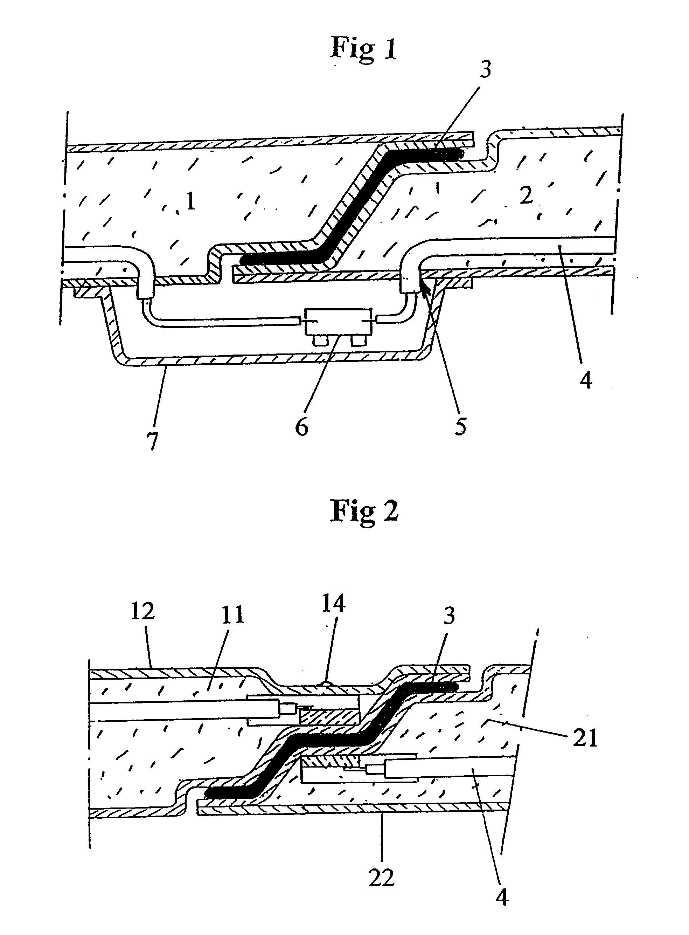

L'art antérieur, représenté à la figure 1, comporte deux panneaux composites 1 et 2 reliés entre eux par un joint de colle 3. Un fil électrique 4 est noyé dans chacun des panneaux et en ressort par un orifice 5. La liaison entre les deux parties du fil électrique 4 est fait par un domino 6 à l'extérieur des panneaux. Afin de cacher cet appendice inesthétique, on fixe un cache 7 qui déborde de la ligne extérieure du panneau composite.

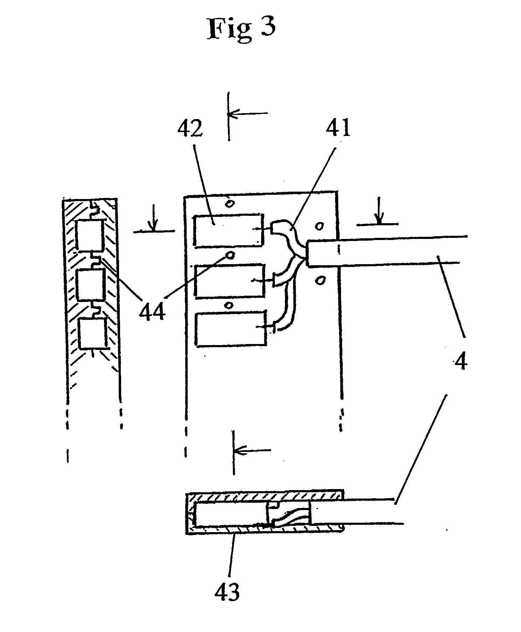

Dans une première variante de l'invention présentée à la figure 2, les deux panneaux composites 1 et 2 sont également reliés par un joint de colle 3. Mais, ici, le fil électrique est noyé dans la mousse (11 et 21) et la résine (12 et 22) constituant la peau du panneau composite et totalement lisse, à l'exception de repères situés à l'emplacement correspondant à l'extrémité du fil électrique 4. Ces repères ont été réalisés lors de la deuxième opération de moulage. L'extrémité du fil électrique 4 est détaillée à la figure 3, où l'on voit que le fil 4 comporte 3 brins 41 reliés de façon connue à des lames de connexion 42. L'ensemble est inséré dans un boîtier 43 constitué de deux parties en matière isolante maintenues ensemble par des picots 44. Ces boîtiers 43 peuvent contenir plusieurs lames de connexion 42 en fonction du nombre de fils à raccorder, deux au minimum.

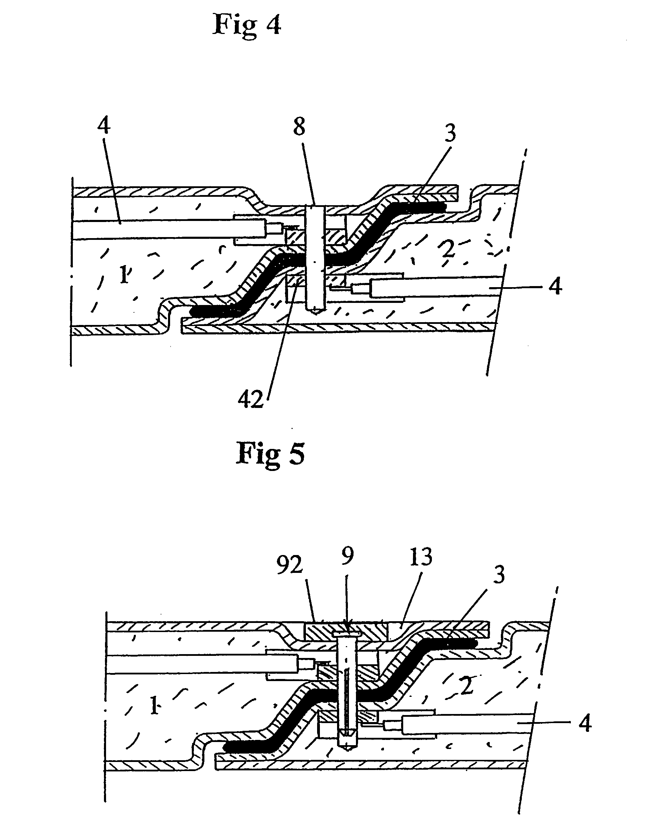

Pour réaliser une liaison, après assemblage des deux panneaux de façon à ce que les extrémités des fils soient en vis à vis, ceci étant réalisé grâce aux repères 14 placés sur la résine des panneaux composites, il suffit de percer des trous 8 au droit de chaque repère 14 correspondant à chaque lame 42 (figure 4). Ensuite, on introduit une fiche 9 comportant une ou plusieurs broches dans chaque trou 8 (figure 5). On peut prévoir un évidement 13 dans le panneau 1 afin de placer la tête 92 de la fiche 9 pour qu'elle reste dans l'alignement de la surface du panneau la rendant ainsi pratiquement invisible.

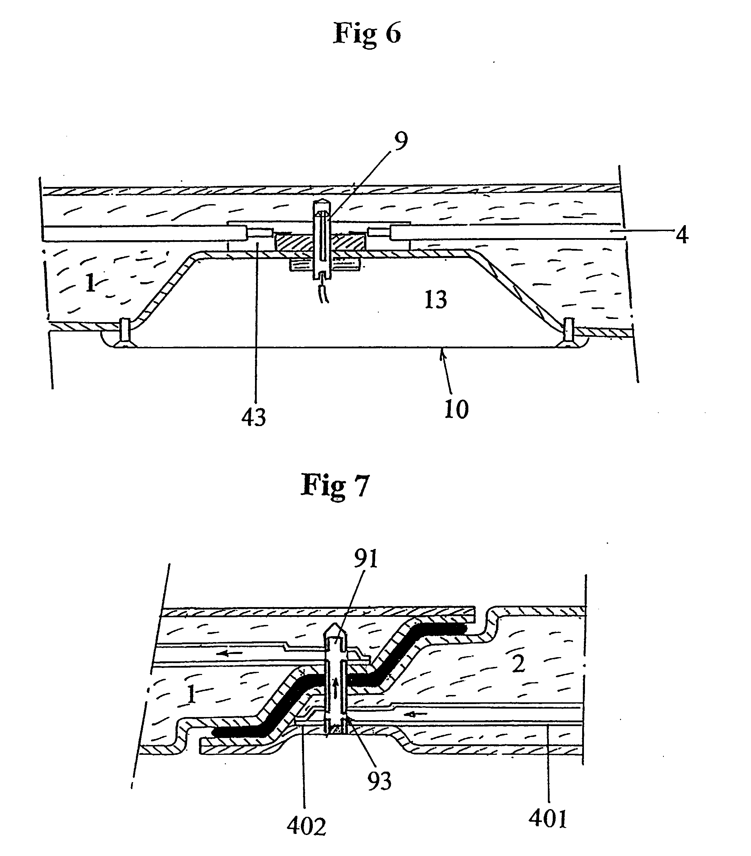

Dans une deuxième variante de l'invention représentée à la figure 6, un panneau composite 1 comporte un fil électrique relié comme précédemment à un boîtier 43 noyé dans le corps du panneau composite. Un appareil peut alors être branché au droit de ce boîtier 43, il suffit de percer un trou 8 au droit du repère 14 apparaissant à la surface du panneau et d'y enficher des broches 9. On peut ainsi disposer un plafonnier 10, et si un évidement 13 a été prévu, le plafonnier 10 est aligné avec la surface du panneau composite 1.

Selon une troisième variante de l'invention représentée à la figure 7, chaque panneau composite comprend une conduite de fluide 401. Les conduites ont été bouchées à leurs extrémités 402 avant la réalisation des panneaux composites, et légèrement aplaties. Après avoir aligné les deux conduites lors du collage des deux panneaux grâce aux repères 14 visibles sur la surface du panneau, on réalise un trou qui part du premier panneau 2 qui traverse la première conduite puis la deuxième, une pige creuse 91 bouchée à ses extrémités est emmanchée en force dans le trou ainsi réalisé. L'étanchéité est assurée par le repoussage de la matière des conduites. Des trous 93 dans la pige assurent le transfert du fluide d'un tube à l'autre.

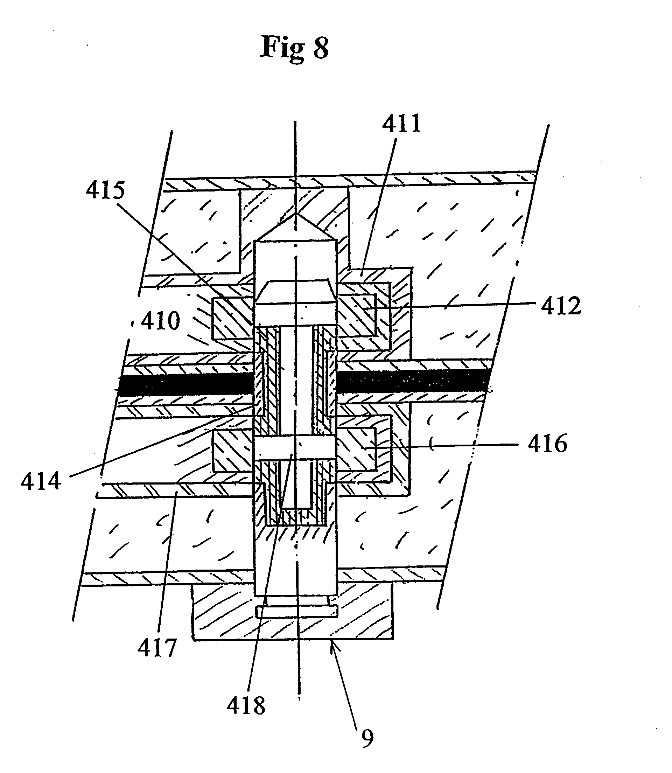

Dans une quatrième variante représentée à la figure 8, l'élément de conduction à relier est un circuit blindé, comme par exemple un circuit de multiplexage. Le circuit blindé est composé de faisceaux de câbles blindés reliés à deux boîtiers conducteurs entourés d'un boîtier isolant. Un boîtier isolant 410 est enfermé dans un second boîtier conducteur 411 et 417 relié au blindage du faisceau de câbles. Les broches sont constituées de parties conductrices séparées par des zones isolantes. Des lames 412 et 416 sont reliés ensemble par la pièce 9 selon le même principe que celui de la première variante, chaque partie conductrice étant en contact avec une partie conductrice 414 et 418 de la pièce 9 et chaque partie isolante avec une partie isolante 415 de la pièce 9. Les pièces de connexion sont séparées par un surmoulage isolant. Les pièces de connexion de la pièce 9 sont séparées par un surmoulage isolant 415 l'ensemble constituant la pièce 9.

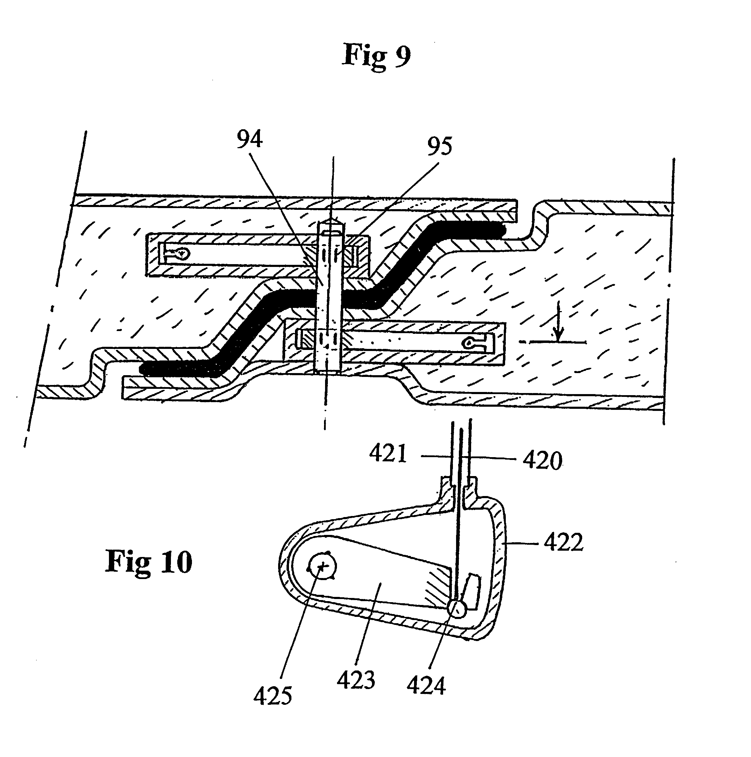

La figure 9 représente une cinquième variante de l'invention, où l'on relie des commandes mécaniques comme des câbles de traction 420 placés dans des gaines de protection 421. Les câbles peuvent coulisser dans la gaine qui est elle-même noyée dans la mousse. Ces gaines sont équipées de boîtier 422 et d'un levier 423, le câble est accroché au levier par l'intermédiaire d'un oeillet 424. Les boîtiers sont également noyés dans la mousse. Pour réaliser la liaison, on pose une goupille cannelée 94, après avoir percé un trou au droit de chaque axe de levier 425 repérés à la surface de chaque panneau. On entre la goupille en force, les cannelures 95 de la goupille 94 coopèrent avec les axes de levier 425 permettant l'entraînement de chaque axe.

La présente invention présente l'avantage de simplifier la fabrication des pièces composites, et de permettre une manipulation sans précautions particulières lors de la fabrication, de la finition et de l'assemblage. Les faisceaux ne nécessitent pas de finition après le moulage, comme le dénudage et la pose des cosses.
La connexion ne nécessite pas de boîtier supplémentaire, donc diminution du nombre de pièces. La réalisation de la connexion est très facile et très rapide.

## Revendications

1. Dispositif de liaison de deux éléments de conduction dont au moins une partie d'un des éléments est intégrée dans un panneau composite (1, 2) composé d'une mousse (11, 21) et d'une peau en résine (12, 22), caractérisé en ce que ledit élément intégré (4) est totalement noyé dans la mousse du panneau composite et en ce que le dispositif de liaison est constitué d'au moins une pièce rapportée (9) qui est insérée dans le panneau composite, au droit de l'élément intégré après perçage.

2. Dispositif de liaison selon la revendication 1, caractérisé en ce que la liaison est réalisée dans un joint entre deux panneaux composites (1, 2).

3. Dispositif de liaison selon la revendication 1, caractérisé en ce que le panneau composite comporte un évidement (13).

4. Dispositif de liaison selon la revendication 1 ou 3, caractérisé en ce que la liaison est réalisée sur une des surfaces du panneau.

5. Dispositif de liaison selon la revendication 4, caractérisé en ce que le deuxième élément est branché sur la surface du panneau composite.

6. Dispositif de liaison selon la revendication 1, caractérisé en ce que le point d'arrivée de l'élément intégré est identifié par un marquage (14) réalisé sur la peau du panneau composite.

7. Dispositif de liaison selon la revendication 1, caractérisé en ce que l'élément de conduction est un fil électrique (4).

8. Dispositif de liaison selon la revendication 7, caractérisé en ce que la pièce rapportée (9) est constituée d'une matière conductrice.

9. Dispositif de liaison selon la revendication 1 ou 7, caractérisé en ce que l'élément de conduction est un fil multiplexé (4).

10. Dispositif de liaison selon la revendication 9, caractérisé en ce que la pièce rapportée (9) est constituée de deux parties conductrices séparées par une partie isolante.

11. Dispositif de liaison selon la revendication 1, caractérisé en ce que l'élément de conduction (401) est constitué d'un tube transportant un fluide.

12. Dispositif de liaison selon la revendication 11, caractérisé en ce que la pièce rapportée (9) est un tube occulté (91) en au moins un de ses deux côtés et comporte au moins deux orifices (92) afin de permettre l'écoulement du fluide.

13. Dispositif de liaison selon la revendication 1, caractérisé en ce l'élément de conduction est constitué d'un câble (420).

14. Dispositif de liaison selon la revendication 13, caractérisé en ce qu'une des extrémités du câble (420) est reliée à un bras de levier (423) disposé dans un boîtier (422) noyé dans la mousse du panneau composite.

15. Dispositif de liaison selon la revendication 13 ou 14, caractérisé en ce que la pièce rapportée est une goupille cannelée (94).

16. Système de liaison d'éléments de conduction caractérisé en ce qu'il comprend au moins un dispositif selon une quelconque des revendications précédentes.
